# EUROPEAN PATENT SPECIFICATION

(11) **EP 2 372 644 B1**
(45) Date of publication and mention of the grant of the patent: **26.12.2012**
(21) Application number: 11153797.3
(22) Date of filing: 09.02.2011
(51) Int. Cl.: G06T 7/00

(54) **ADJUSTMENT OF AN IMAGING APPARATUS IN A MANUFACTURING LINE**
JUSTIERUNG EINER BILDAUFNAHMEVORRICHTUNG IN EINER FERTIGUNGSSTRECKE
AJUSTAGE D'UN APPAREIL DE PRISE DE VUE DANS UNE LIGNE DE FABRICATION

(30) Priority: 12.03.2010 JP 2010056552
(43) Date of publication of application: 05.10.2011
(73) Proprietor: OMRON Corporation, Shiokoji-dori, Shimogyo-ku Kyoto-shi Kyoto 600-8530 (JP)
(72) Inventor: Araki, Tsunehiko, Kyoto-shi Kyoto 600-8530 (JP); Shimada, Koji, Kyoto-shi Kyoto 600-8530 (JP)
(74) Representative: Horn Kleimann Waitzhofer

(56) References cited:
- US-B1- 6 785 404
- US-B2- 7 477 774

## Description

The present invention relates to an image processing apparatus and an image processing program for processing an image captured by an imaging apparatus, and in particular relates to an image processing apparatus and an image processing program for assisting the adjustment of an installation aspect pertaining to the imaging apparatus. The present invention also relates to a visual sensor system including such an image processing apparatus as well as to an image processing method for processing images from an imaging apparatus installed in a manufacturing line.

### 2. RELATED ART

In the field of FA (Factory Automation) and the like, a so-called visual sensor is used as an apparatus for optically detecting defects in half-finished products in the manufacturing process, in finished products before shipping, and the like, and for optically measuring the size of such defects.

When detecting and measuring defects with such a visual sensor, it is necessary to appropriately capture an image of the workpiece (object). Inspection and measurement are carried out by performing various types of image processing on input images obtained by imaging.

When a visual sensor is installed at an actual manufacturing site or the like, it is necessary to set appropriate imaging settings in the imaging apparatus included in the visual sensor. One typical example of such an imaging setting is a setting regarding the angle of view (or field of view) of the imaging apparatus. In this description, the angle of view (or field of view) indicates the range that is imaged by the imaging apparatus, and this range is called the "imaging range", which is the range in which a workpiece can be located.

The visual field of the imaging apparatus is determined by its installation location, such as the installation angle. If the visual field becomes misaligned with a predetermined visual field due to a shift in the installation location of the imaging apparatus or the like at the manufacturing site, the workpiece will cease to fully appear in the visual field, thus making it difficult to carry out an inspection using images. Accordingly, in order to return the imaging apparatus to the original installation location, it is common to manually adjust the installation location through trial and error while checking an image on a monitor, such that the workpiece appears at a predetermined location in the visual field.

One example of a technique for assisting such adjustment of the installation location of the imaging apparatus is the monitoring camera system proposed in Japanese Published Patent Application No. JP 2010-21920A

The camera system disclosed in JP 2010-21920A enables setting the same state as the previous state during camera replacement, thus reducing the number of steps required in camera setting. More specifically, when a replacement of the camera has been detected, camera setting information that has been stored in advance is transmitted to the replacement camera, and current subject information that has been acquired from the replacement camera is compared with previously stored subject information. The replacement camera is notified if the two pieces of subject information match, thus giving a notification that the same state as the previous state has been set during camera replacement.

US Patent 7,477,774 B2 discloses a method of estimating the position of the field of view of an imaging device, such as a camera, relative to a board involves designating markings on the board as references and detecting the shift in these reference markings within the field of view of the camera compared to a known position therein. The reference markings are selected such that detection thereof involves analysis of only a subset of the image produced by the imaging device. The selection of a group of one or more markings to serve as a reference involves determination of the image region (error window) in which the reference marking(s) may appear, given the maximal positional error of the imaging device.; It is also checked that the entire error window will be within the useable field of view of the imaging device and that, within the error window, no other group of markings will appear that could be confused with the selected group of markings. Detection of the reference group of markings involves generation of an image profile along a line crossing the center of the error window and finding the best match between the markings along this profile and the markings in the reference group. US Patent 6,785,404 B1 discloses an image positional relation apparatus, in which coordinate data of a real targed photographed by a CCD camera and coordinate data of a virtual target logically calculated from the predetermined position of the real target are transmitted to a superimpose circuit, and the real target and the virtual target are superimposed to be displayed on a monitor screen. A user operates a controller so that the real target coincides with the virtual target. An amount of such operation is transmitted to the superimpose circuit as a correction amount, and the positional relation between the real target and the virtual target, i.e., the positional relation between the real image and the virtual image can be properly corrected.

### SUMMARY

In the camera system disclosed in JP 2010-21920A described above, the notification is nothing more than a notification of whether the same state as the previous state has been set during camera replacement, and if the same state has not been set, the user is not notified of in which direction and how much the location of the camera should be changed. For this reason, the problem remains that even if the camera is set again, the attached state of the camera needs to be set by trial and error.

In view of this, an object of the present invention is to provide an image processing apparatus and an image processing program that enable easily adjusting the installation location of an imaging apparatus.

An image processing apparatus according to one aspect of the present invention has the features recited in claim 1. In particular, the output unit may output a signal representing the processed image and the second captured image in a superimposed state, or a signal representing an image (superimposed image) obtained by superimposing the processed image and the second captured image.

Preferably, the output unit outputs an amount of image misalignment between the superimposed images, that is, between the processed image and the second captured image.

Preferably, the processing unit includes a contour image processing unit for converting a captured image of the object into a contour image of the object.

Preferably, the processing unit includes a transparent image processing unit for converting a captured image of the object into a transparent image of the object.

Preferably, the processing unit includes a freehand line image processing unit for incorporating a line image received as freehand input from an external device into the captured image.

Preferably, the predetermined imaging range is an imaging range acquired when the imaging apparatus is installed at the predetermined installation location.

Furthermore provided is an image processing program to be executed by a computer adapted to receive captured images from an imaging apparatus installed in a manufacturing line, the image processing program causing the computer to function as an image processing apparatus as described above.
Furthermore, a visual sensor system in accordance with the present invention includes an image processing apparatus as described above; and an imaging apparatus adapted to output captured images of an object.
Moreover, in accordance with the present invention, an image processing method for processing images from an imaging apparatus installed in a manufacturing line includes the feature recited in claim 8.

According to the present invention, a first captured image of an object and a second captured image of the object received by a receiving unit are output in a superimposed state, thus enabling a user to become aware of the amount of misalignment between the superimposed images by checking the output. As a result, the user can check whether the imaging range is misaligned, that is to say, whether the installation location of the imaging apparatus is misaligned with a predetermined location, and can also check the amount of misalignment. The user can then adjust the installation location of the imaging apparatus based on the amount of misalignment checked in the output.

### BRIEF DESCRIPTION OF THE DRAWINGS

FIG. 1 is a schematic diagram showing an overall configuration of a visual sensor system including an image processing apparatus according to a first embodiment of the present invention;
FIG. 2 is a schematic configuration diagram of the image processing apparatus according to the first embodiment of the present invention;
FIG. 3 is a main flowchart showing imaging processing according to the first embodiment of the present invention;
FIG. 4 is a flowchart showing processing performed in a registration mode according to the first embodiment of the present invention;
FIG. 5 is a flowchart showing processing performed in an adjustment mode according to the first embodiment of the present invention;
FIG. 6 is a flowchart showing edge detection image registration processing according to the first embodiment of the present invention;
FIG. 7 is a flowchart showing transparent image registration processing according to the first embodiment of the present invention;
FIG. 8 is a flowchart showing freehand image registration processing according to the first embodiment of the present invention;
FIGS. 9A to 9E are diagrams showing examples of display images according to the first embodiment of the present invention;
FIG. 10 is a flowchart showing an example of a display image in the adjustment mode according to the first embodiment of the present invention;
FIG. 11 is a schematic configuration diagram of a visual sensor system according to a second embodiment of the present invention;
FIG. 12 is a configuration block diagram of a visual sensor system according to the second embodiment of the present invention;
FIG. 13 is a diagram schematically showing how an image processing apparatus according to the second embodiment of the present invention is attached; and
FIG. 14 is a diagram schematically showing how image processing apparatuses according to the second embodiment of the present invention are attached to a manufacturing line.

### DETAILED DESCRIPTION

Below is a detailed description of embodiments of the present invention with reference to the drawings. Note that portions in the drawings that are the same or correspond to each other have been given the same reference signs, and redundant descriptions thereof will not be given.

### First embodiment

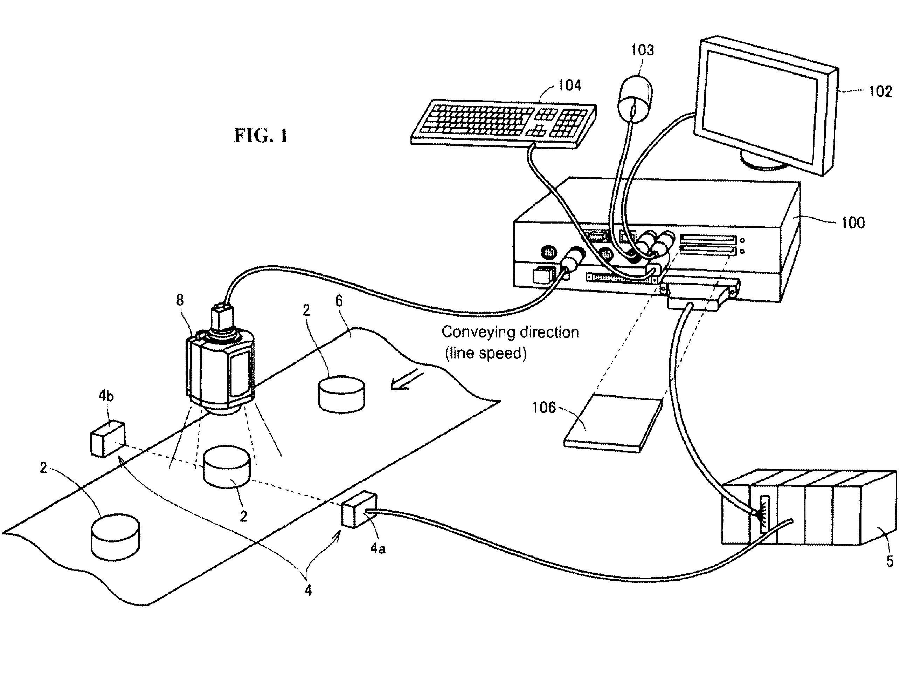

FIG. 1 is a schematic diagram showing an overall configuration of a visual sensor system including an image processing apparatus 100 according to a first embodiment of the present invention.

As shown in FIG. 1, a visual sensor system 1 that is incorporated in an FA production/manufacturing line or the like detects the presence of a defect or a dirty spot on an object (hereinafter, also referred to as a "workpiece") 2 subjected to measurement, measures the size or the like of the defect or dirty spot, and recognizes characters, a graphic, or the like on the surface of the workpiece. As one example, in the present embodiment, workpieces 2 are conveyed by a conveying mechanism 6 such as a belt conveyor and sequentially imaged by an imaging apparatus 8. Image data (hereinafter, also referred to as "input images") obtained by the imaging apparatus 8 is transmitted to the image processing apparatus 100. Note that it is possible to further provide an illumination mechanism that emits light onto the workpieces 2 that are to be imaged by the imaging apparatus 8.

A photoelectric sensor 4 made up of two parts disposed on respective sides of the conveying mechanism 6 detects the fact that a workpiece 2 has arrived at and become located in the imaging range of the imaging apparatus 8. Specifically, the photoelectric sensor 4 includes a photoreception unit 4a and a photoemission unit 4b disposed on the same optical axis. The photoreception unit 4a detects the fact that light emitted from the photoemission unit 4b is blocked by the workpiece 2, thus detecting the arrival of the workpiece 2. A detection signal (hereinafter, also referred to as a "trigger signal") from the photoelectric sensor 4 is output to a PLC (Programmable Logic Controller) 5.

The PLC 5 receives the trigger signal from the photoelectric sensor 4 and the like, and performs control of the conveying mechanism 6.

The visual sensor system 1 further includes the image processing apparatus 100, a display 102, and a keyboard 104. The image processing apparatus 100 is connected to the PLC 5, the imaging apparatus 8, the display 102, and the keyboard 104.

The image processing apparatus 100 has various types of operating modes, namely a measurement mode for executing various types of image processing for inspecting the workpiece 2, and a registration mode and an adjustment mode for adjusting the installation location of the imaging apparatus 8. In the measurement mode, the image processing apparatus 100 gives an imaging command to the imaging apparatus 8 upon receiving the trigger signal from the photoelectric sensor 4 via the PLC 5. In response to the imaging command, the imaging apparatus 8 transmits an input image obtained by capturing an image of the workpiece 2 to the image processing apparatus 100. As an alternative processing method, a configuration is possible in which the imaging apparatus 8 is caused to continuously perform imaging, and the image processing apparatus 100 obtains only necessary input images in response to receiving the trigger signal.

The imaging apparatus 8 is configured by, for example, an optical system such as a lens, and an imaging element partitioned into a plurality of pixels, such as a CCD (Coupled Charged Device) sensor or a CMOS (Complementary Metal Oxide Semiconductor) sensor. The imaging apparatus 8 is assumed to be attached such that its installation location, which determines the imaging range, can be changed manually.

The image processing apparatus 100 is a computer having a general-purpose architecture, and provides various types of functions, which will be described later, by executing a pre-installed program. In the case of using such a general-purpose computer, an OS (Operating System) for providing the basic functions of the computer may be installed in addition to an application for providing functions according to the present embodiment. In such a case, the program according to the present embodiment may cause processing to be executed by calling necessary modules among program modules provided as part of the OS, at predetermined timings in a predetermined array. In other words, the program itself according to the present embodiment does not include modules such as those described above, and causes processing to be executed by cooperating with the OS. The program according to the present embodiment may be in a form that does not include some of these modules.

Furthermore, the program according to the present embodiment may be provided by being incorporated in part of another program. In such a case as well, the program itself does not include modules such as those described above that are included in the other program in which it is incorporated, and causes processing to be executed by cooperating with the other program. In other words, the program according to the present embodiment may be in a form of being incorporated in another program such as this.

Note that part or all of the functions provided by the execution of the program may be implemented as dedicated hardware circuitry.

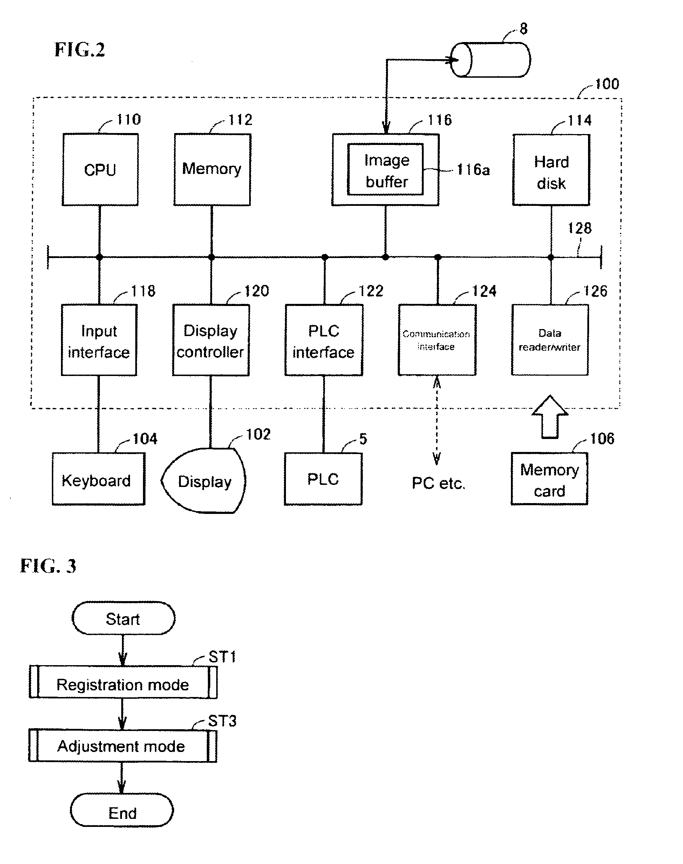

FIG. 2 is a schematic configuration diagram showing the image processing apparatus 100 according to the first embodiment of the present invention. As shown in FIG. 2, the image processing apparatus 100 includes a CPU (Central Processing Unit) 110, which is an arithmetic processing unit, a memory 112 and a hard disk 114, which are storage units, a camera interface 116, an input interface 118, a display controller 120, a PLC interface 122, a communication interface 124, and a data reader/writer 126. These units are connected via a bus 128 such that data can be exchanged therebetween.

The CPU 110 performs various types of computation by deploying programs (code) stored in the hard disk 114 to the memory 112 and executing the programs in a predetermined sequence, and thus functions as a processing unit. The memory 112 is typically a volatile storage apparatus such as a DRAM (Dynamic Random Access Memory), and stores programs read out from the hard disk 114, as well as input images acquired by the imaging apparatus 8, data indicating results of processing performed on the input images, workpiece data, and the like. The hard disk 114 is a nonvolatile magnetic storage apparatus, and has pre-stored therein programs to be executed by the CPU 110, as well as various types of setting values and the like. A program to be installed in the hard disk 114 is distributed in the state of being stored on a memory card 106 or the like as will be described later. Note that a semiconductor storage apparatus such as a flash memory may be employed in addition to the hard disk 114 or in place of the hard disk 114.

The camera interface 116 mediates the transmission of data between the CPU 110 and the imaging apparatus 8. More specifically, the camera interface 116 includes an image buffer 116a that can be connected to one or more imaging apparatuses 8 and is for temporarily accumulating image data from the imaging apparatuses 8. When at least one frame-worth of input image data has been accumulated in the image buffer 116a, the camera interface 116 transfers the accumulated data to the memory 112. Accordingly, the camera interface 116 functions as a receiving unit.

The memory 112 stores image data in units of image files. In the case of performing processing on an input image, the CPU 110 reads out an image file from the memory 112. The readout image file referred to here is an image (multi-value image) made up of a plurality of pixels in a two-dimensional array.

The camera interface 116 gives an imaging command to the imaging apparatus 8 in accordance with an internal command issued by the CPU 110.

The input interface 118 mediates the transmission of data between the CPU 110 and input apparatuses such as the keyboard 104, a mouse 103, and a touch panel (not shown). Specifically, the input interface 118 receives an operation command given by the user operating an input apparatus.

The display controller 120 is connected to the display 102, which is a typical example of a display apparatus, and notifies the user of, for example, results of image processing performed by the CPU 110. In particular, the display controller 120 may output signals representing images and thus functions as an output unit.

The PLC interface 122 mediates the transmission of data between the CPU 110 and the PLC 5. More specifically, the PLC interface 122 transmits, to the CPU 110, information regarding the state of the production line controlled by the PLC 5, information regarding the workpiece, and the like.

The communication interface 124 mediates the transmission of data between the CPU 110 and another personal computer, a server apparatus, or the like, which are not shown. The communication interface 124 is typically an Ethernet (registered trademark) interface, a USB (Universal Serial Bus) interface, or the like. Note that as will be described later, as an alternative to the embodiment in which a program stored on the memory card 106 is installed in the image processing apparatus 100, an embodiment is possible in which a program downloaded from a distribution server (not shown) or the like via the communication interface 124 is installed in the image processing apparatus 100.

The data reader/writer 126 mediates the transmission of data between the CPU 110 and the memory card 106, which is a storage medium. Specifically, a program or the like that is to be executed by the image processing apparatus 100 is distributed in the state of being stored on the memory card 106, and the data reader/writer 126 reads out the program from the memory card 106. The data reader/writer 126 also writes, for example, an input image acquired by the imaging apparatus 8 and/or the results of processing performed by the image processing apparatus 100 to the memory card 106 in response to an internal command from the CPU 110. Note that the memory card 106 is, for example, a general-purpose semiconductor storage device such as a CF (Compact Flash) device or an SD (Secure Digital) device, a magnetic storage medium such as a flexible disk, or an optical storage medium such as a CD-ROM (Compact Disc Read-Only Memory).

Another output apparatus such as a printer may also be connected to the image processing apparatus 100 as necessary.

### <Overview>

In the present embodiment, the registration mode is a mode in which the imaging apparatus 8 is installed at a predetermined installation location, which is preferably a location at which the workpiece 2 is located in the center of the imaging range, benchmark information that is to be referenced when adjusting the installation location of the imaging apparatus 8 is generated by capturing an image of the workpiece 2 and sequentially performing pre-set image processing on the input image obtained by such imaging, and the generated benchmark information is registered (stored). In contrast, the adjustment mode is a mode in which reference information for adjusting the installation location of the imaging apparatus 8, or preferably setting the installation location to the predetermined installation location, is generated by processing the benchmark information on an input image obtained by capturing an image of the workpiece 2, and the generated reference information is output. Note that here, the operating mode of the image processing apparatus 100 is assumed to be switched in accordance with an instruction given to the CPU 110 by the user operating an input apparatus.

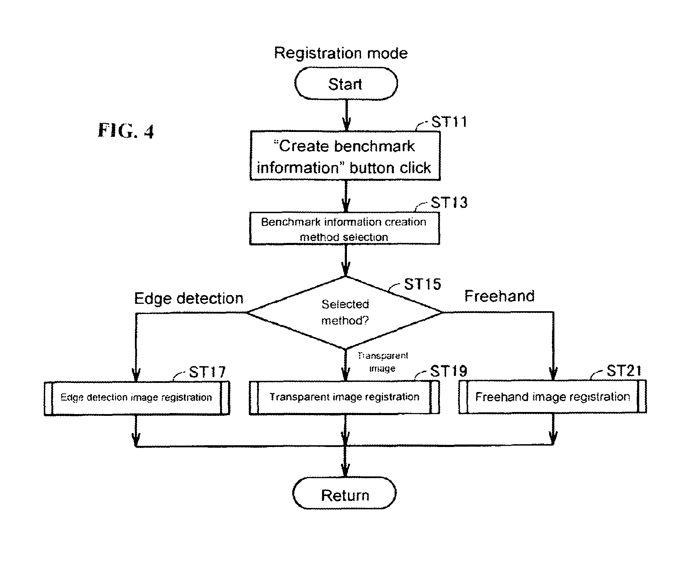

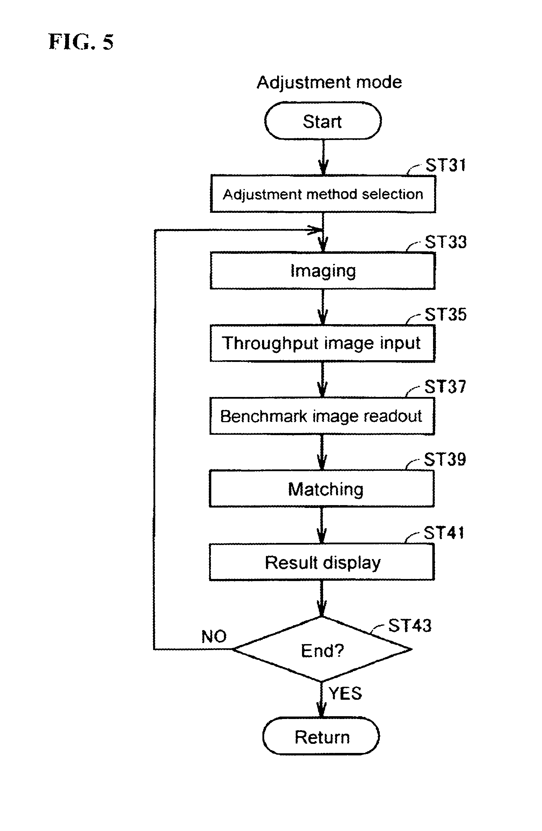

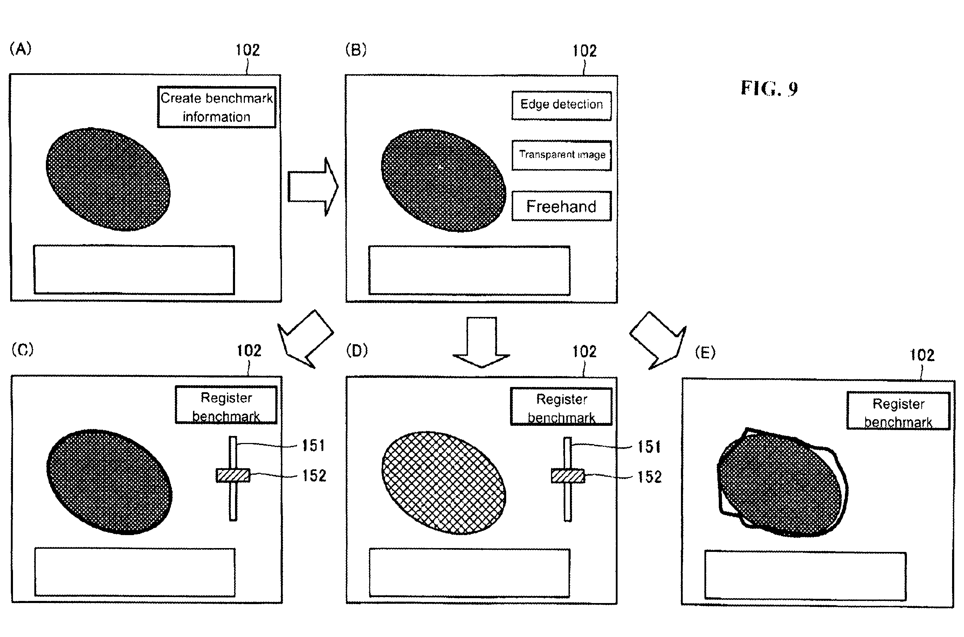

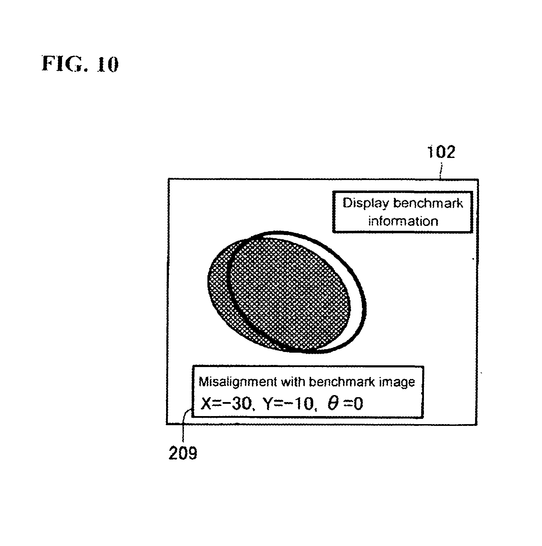

FIG. 3 is a main flowchart showing image processing according to an embodiment of the present invention. The image processing according to this embodiment of the present invention includes registration mode processing (step ST1) (hereinafter, steps will simply be referred to by the abbreviation "ST"), which is shown in FIGS. 4 and 6 to 8, and adjustment mode processing (ST3), which is shown in FIG. 5. When the registration mode processing and the adjustment mode processing are executed, the images shown in FIGS. 9 and 10 respectively are displayed by the display 102. Below is a description of the processing executed in these modes with reference to the exemplary display images in FIGS. 9 and 10 as necessary.

Note that it is sufficient to be able to compare a benchmark information image obtained in the registration mode and an input image obtained in the adjustment mode, and the order in which the processing in the registration mode and the adjustment mode is executed is not intended to be limited to the order shown in FIG. 3.

### (Registration mode)

The following describes the registration mode processing with reference to FIG. 4. It is assumed that prior to the registration mode, the imaging apparatus 8 has been installed in association with the conveying mechanism 6 on which the workpiece 2 is placed as shown in FIG. 1, and has been adjusted such that its installation location is a predetermined installation location at which an image of the workpiece 2 is located at a predetermined location (e.g., a central location) in the imaging range.

In the registration mode, in this state in which such adjustment has been performed, the screen shown in FIG. 9A is displayed by the display 102. After having checked the screen, the user clicks a "Create benchmark information" button on the screen by operating an input apparatus. Accordingly, a benchmark information creation instruction is given to the CPU 110 (ST11).

Upon receiving an input of the benchmark information creation instruction, the CPU 110 displays the screen shown in FIG. 9B on the display 102 in place of the screen shown in FIG. 9A. The screen shown in FIG. 9B prompts the user to select a benchmark information creation method. Specifically, three types of methods, namely "edge detection", "transparent image", and "freehand", are displayed on the screen as benchmark information creation methods. Buttons indicating these methods are displayed by the display 102. As a result of the user selectively designating one of the displayed buttons with use of an input apparatus such as the mouse 103, an instruction indicating the designated benchmark information creation method is given to the CPU 110.

Note that the data in the screens shown in FIGS. 9A and 9B is assumed to be stored in the hard disk 114 in advance.

When the user has selected one of the three creation methods "edge detection", "transparent image", and "freehand" shown in FIG. 9B, the CPU 110 determines the selected creation method (ST15). In accordance with the result of the determination, the CPU 110 switches the screen displayed by the display 102 to the screen shown in FIG. 9C (if "edge detection" has been selected), the screen shown in FIG. 9D (if "transparent image" has been selected"), or the screen shown in FIG. 9E (if "freehand" has been selected), which are all for creating benchmark information, and proceeds to processing for creating benchmark information (edge detection image registration (ST17), transparent image registration (ST19), or freehand image registration (ST21)) in accordance with the selected creation method. When the benchmark information creation processing has ended, the processing returns to the main processing shown in FIG. 3.

Buttons for executing benchmark registration are displayed in the screens shown in FIGS. 9C to 9E.

### (Edge detection image registration)

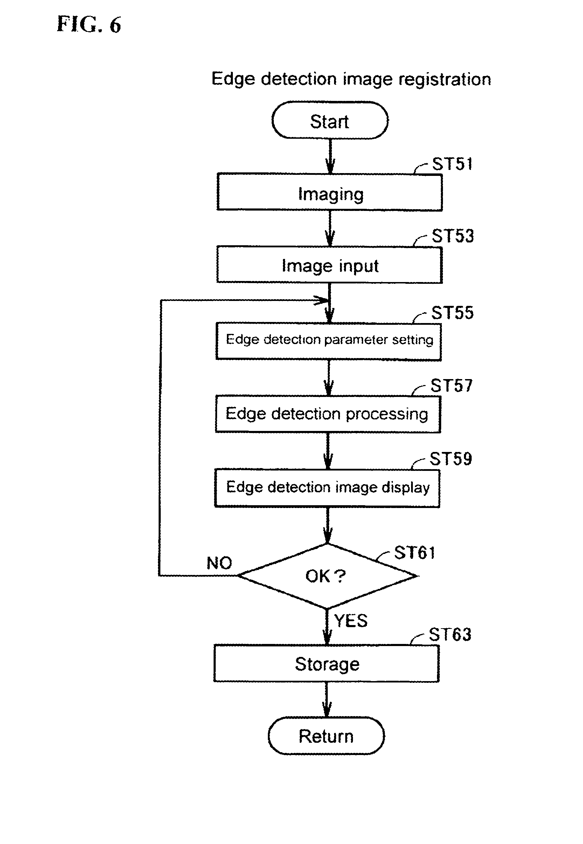

The following describes the edge detection image registration processing of ST17 with reference to FIG. 6.

The CPU 110 receives an input of an image by reading out, from the memory 112, an image file for one frame-worth of an image captured by the imaging apparatus 8, and displays the input image on the display 102 (ST51 and ST53). Upon receiving the image, the CPU 110 detects the location of a slider 152 and converts the location into a parameter value (ST55), detects edges, which are the contours of the image of the workpiece 2, in the input image with use of the obtained parameter value (ST57), and displays the detected edge information on the display 102 with use of an image made up of bold lines as shown in FIG. 9C (ST59). Next, the CPU 110 determines whether a processing end instruction has been given by the user operating an input apparatus (ST61).

Upon determining that an end instruction has not been given (NO in ST61), the CPU 110 returns to the processing of ST55, and the subsequent processing is performed in the same manner. Accordingly, such processing is repeated while updating the parameter value until a desired edge image has been obtained.

Upon determining that an end instruction has been given, the CPU 110 stores the extracted edge image data in a predetermined storage area of the memory 112 (ST63). This ends the edge detection image registration processing.

In general, a filter is applied in order to perform edge detection, examples of which include known correlation edge filters and Sobel filters. In the case of a correlation edge filter, a parameter determining the size (contour line width) of a local region targeted for filter processing, an edge strength threshold parameter, and the like are used. In the case of a Sobel filter, the edge strength threshold parameter is used. The above-described filters and parameters are merely examples, and there is no limitation to these.

In ST55, the values of the above-described parameters for edge detection can be changed by the user performing a sliding operation on the slider 152 displayed in the screen shown in FIG. 9C with use of an input apparatus.

The slider 152 moves freely in the lengthwise direction of a slide bar 151, which is a bar-shaped area, due to a sliding operation being performed. The CPU 110 detects the moved location of the slider 152 on the slide bar 151, and converts the detected slider location into a parameter value for edge detection based on a predetermined conversion equation. The CPU 110 then executes edge detection processing with use of the parameter value obtained by conversion, and displays the obtained edge image on the display 102 in accordance with the edge detection processing results (see the bold lines shown in FIG. 9C).

### (Transparent image registration)

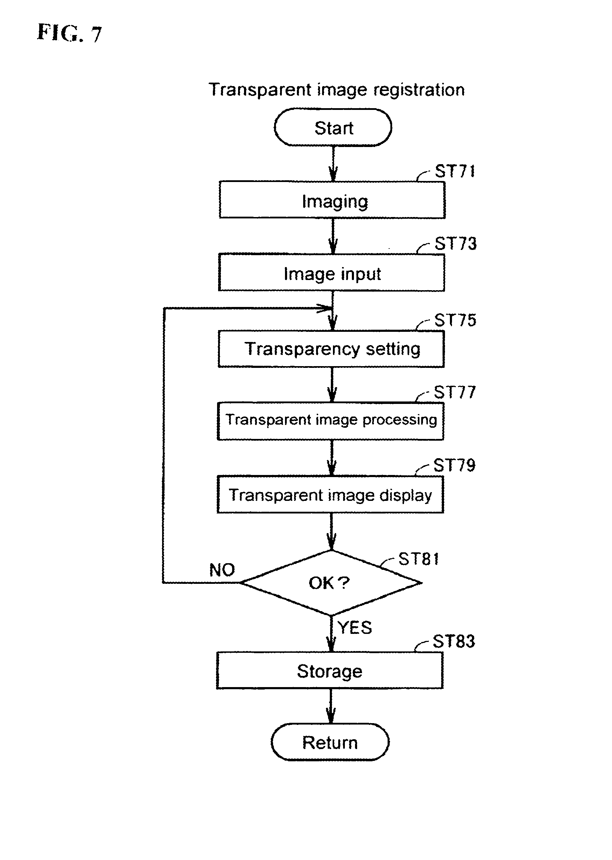

The following describes the transparent image registration processing of ST19 with reference to FIG. 7.

Similarly to the above-described processing in ST51 and ST53, the CPU 110 receives an input of an image captured by the imaging apparatus 8 and displays the image on the display 102 (ST71 and ST73). Upon receiving the image, the CPU 110 detects the location of the slider 152 and converts the location into a transparency parameter value (ST75), generates a transparent image of the workpiece 2 from the input image with use of the parameter value obtained by conversion (ST77), and displays the transparent image on the display 102 as shown in FIG. 9D (ST79). The user checks the displayed transparent image, and the CPU 110 determines whether a processing end instruction has been given by the user operating an input apparatus (ST81).

Upon determining that an end instruction has not been given (NO in ST81), the CPU 110 returns to the processing of ST75, and the subsequent processing is performed in the same manner. Accordingly, such processing is repeated while updating the transparency parameter value until a desired transparent image has been obtained.

Upon determining that an end instruction has been given, the CPU 110 stores the generated transparent image data in a predetermined storage area of the memory 112 (ST83). This ends the transparent image registration processing.

In general, a filter is applied in order to cause an image to become transparent such that the background can be seen through the image.

If "transparent image" has been selected, the CPU 110 uses the above-described edge detection to detect an image region surrounded by the contour of the workpiece 2 in the image data received from the imaging apparatus 8, and executes transparency processing on the image inside the detected region. The parameter value of the filter used in the transparency processing referred to here is transparency. The filter changes the values of pixels with use of the parameter value.

The parameter value can be changed by moving the slider 152 displayed on the display 102, which can move freely along the lengthwise axis direction of the slide bar 151. Accordingly, a transparent image of the workpiece 2 whose transparency changes in coordination with the movement of the slider 152 is displayed on the display 102, and this display is switched by executing transparent image processing with use of a parameter value that is switched in coordination with the movement of the slider 152.

### (Freehand image registration)

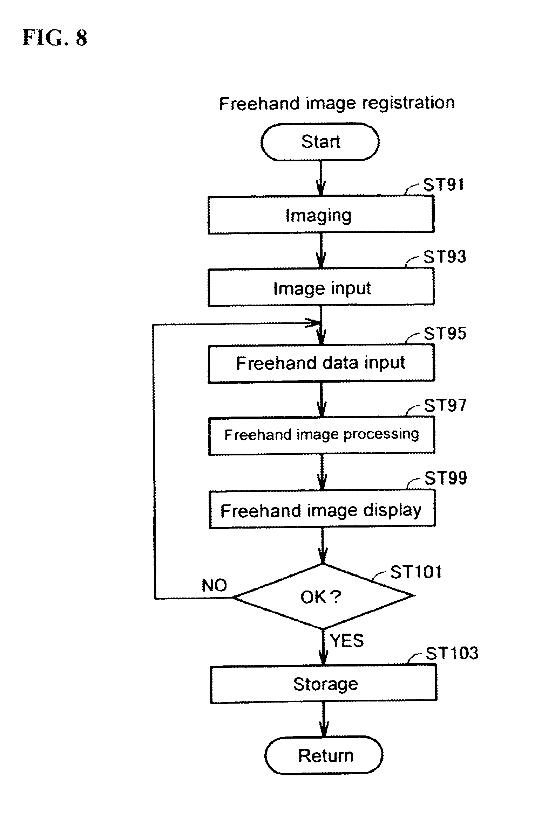

The following describes the freehand image registration processing in ST21 with reference to FIG. 8.

Similarly to the above-described processing in ST51 and ST53, the CPU 110 receives an input of an image captured by the imaging apparatus 8 and displays the image on the display 102 (ST91 and ST93). In order to input line segments by "freehand", the user moves the location of a cursor on the display 102 by operating a pointing device input apparatus such as the mouse 103 while checking the image on the display 102. The location obtained by moving the cursor on the screen is successively input to the CPU 110 (ST95).

The input locations are detected as coordinate values on an image corresponding to the image indicated by the two-dimensional array image data, that is to say, a two-dimensional coordinate space (ST97). Accordingly, when the user moves the cursor by operating the input apparatus, the trajectory of the movement is acquired as continuous coordinate values. The acquired series of coordinate values is displayed on the display 102 as data indicating lines input by the user by freehand as shown in FIG. 9E (ST99).

The user checks the displayed freehand image, and the CPU 110 determines whether a processing end instruction has been given by the user operating an input apparatus (ST101).

Upon determining that an end instruction has not been given (NO in ST101), the CPU 110 returns to the processing of ST95, and the subsequent processing is performed in the same manner. Accordingly, such processing is repeated while updating the freehand input data until the user has input desired freehand line segments.

Upon determining that an end instruction has been given, the CPU 110 stores the generated image data, in which freehand lines are incorporated, in a predetermined storage area of the memory 112 (ST103). This ends the freehand image registration processing.

Here, the freehand line that is to be registered is assumed to be substantially one closed curve.

### (Adjustment mode)

The following describes the adjustment mode processing with reference to FIG. 5.

It is assumed that image data (edge detection image, transparent image, or freehand image) to serve as benchmark information has been registered in the registration mode described above.

In the adjustment mode, firstly the user selectively inputs an adjustment method instruction indicating which registration image is to be used in the adjustment (ST31). The CPU 110 receives the selected adjustment method.

Upon the image processing apparatus 100 receiving the trigger signal from the photoelectric sensor 4 via the PLC 5 while the workpiece 2 is being conveyed by the conveying mechanism 6, the image processing apparatus 100 gives the imaging apparatus 8 an imaging command, and in accordance with this imaging command, the imaging apparatus 8 captures an image of the workpiece 2 located in the imaging range (ST33). The CPU 110 then stores the image data of the input image from the imaging apparatus 8 in the memory 112 (ST35). Hereinafter, this input image will be referred to as a "throughput image" in order to distinguish it from the benchmark information registration image.

Based on the adjustment method selected in ST31, the CPU 110 reads out the benchmark information (registration image) instructed by the adjustment method from the memory 112 (ST37). The readout registration image and throughput image are then superimposed and displayed at the same time on the display 102, later-described matching processing is performed, and the results of the matching processing are displayed on the display 102 with use of a message 209 (ST39 and ST41). FIG. 10 shows an example of this display.

Next, the CPU 110 determines whether a processing end instruction has been given by the user operating an input apparatus (ST43).

Upon determining that an end instruction has not been given (NO in ST43), the CPU 110 returns to the processing of ST33, and the subsequent processing is performed in the same manner. Upon determining that an end instruction has been given (YES in ST43), the processing returns to the main processing shown in FIG. 3.

Accordingly, the user can determine whether there is a need to adjust (change) the installation location of the imaging apparatus 8 while checking the information in the images shown in FIG. 10. Upon determining that adjustment is necessary, the user can become aware of, based on the matching results shown in the message 209, in which direction and how much the installation location should be changed, and quickly proceed with adjustment.

### (Matching processing)

The following describes the matching processing in ST39 and ST41 with reference to FIG. 10.

In FIG. 10, an edge detection image serving as the benchmark information registration image is displayed superimposed with the throughput image. In the matching processing, the coordinate values of the center of the edge detection image (elliptical line image) and the center of the throughput image in FIG. 10 are detected. Here, it is assumed that the pixels of the registration image and the throughput image are arranged in an array of two-dimensional coordinates, and that the coordinates are prescribed by an X axis and a Y axis that intersect each other. Accordingly, the detected coordinate values of the center are each indicated by a coordinate (X,Y). Note that the origin coordinate (0,0) is assumed to be the top left corner of the display 102 when the image is displayed on the display 102.

In the matching processing, location misalignment is calculated as (X value of center coordinate of registration image) - (X value of center coordinate of throughput image) and (Y value of center coordinate of registration image) - (Y value of center coordinate of throughput image), and values based on the calculation results are displayed in the message 209. Also, orientation misalignment is calculated as an angle θ formed by the major axes obtained when the registration image and the throughput image are respectively approximated to an ellipse, and the angle θ is displayed in the message 209.

Although an example of matching processing performed on an edge detection image has been given, matching processing can be similarly applied to a freehand image and a transparent image as well.

Note that if the registration image and the throughput image match without any misalignment, the display color of the registration image on the display 102 may be changed, or a predetermined message may be displayed. As one example of changing the display color of the registration image, a configuration is possible in which the edge detection image and the freehand image are changed from red to green, and the color of the transparent image is changed so as to be the inverse of the background color. Also, a configuration is possible in which the matching portion and mismatched misaligned portion of the two images are output in different manners, such as using different display colors.

In this way, displaying the benchmark information registration image and the throughput image superimposed with each other enables the user to visually become aware of the degree of coincidence between the two images, that is to say, any misalignment between the installation location of the imaging apparatus 8 and the predetermined installation location. Accordingly, even if the installation location of the imaging apparatus 8 is misaligned, it can be quickly returned to a previous position (the predetermined installation location when the benchmark information image was registered).

Also, information indicating quantified amounts of misalignment is presented as guidance with the message 209, thus making it easier for the user to become aware of the amount that the installation location of the imaging apparatus 8 is to be adjusted.

### Second embodiment

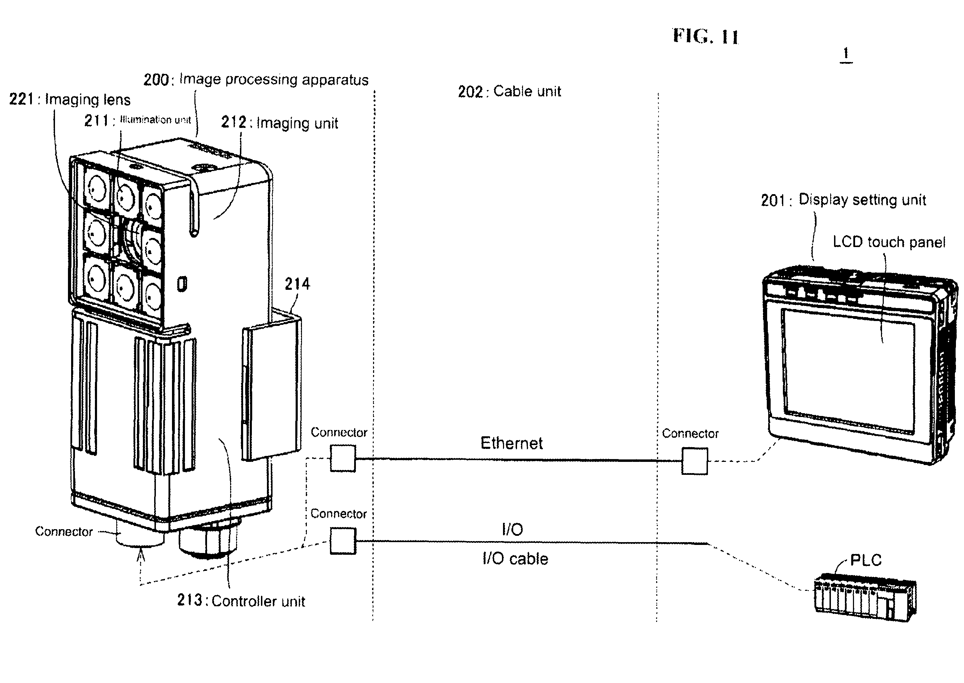

Below is a description of a second embodiment with reference to FIGS. 11 to 14.

Although the image processing apparatus 100 and the imaging apparatus 8 are separate and independent from each other in the first embodiment, their functionality may be integrated as shown in the present embodiment.

As shown in FIG. 11, a visual sensor system according to the second embodiment includes an image processing apparatus 200 in which an imaging function and an image processing function are included, a display setting unit 201 in which a function for displaying results of processing performed by the image processing apparatus 200 and a function for receiving an input of a user instruction are included, and a cable unit 202 provided for exchanging data and signals between the image processing apparatus 200 and the display setting unit 201.

In the present embodiment, the functionality of the imaging apparatus 8 and the functionality of the image processing apparatus 100 in the first embodiment are integrated in the image processing apparatus 200. The image processing apparatus 200 is provided separately from the display setting unit 201 that corresponds to the display apparatus for displaying captured images, processing results, and the like. Accordingly, the user can carry the display setting unit 201 and check captured images and processing results while on the move.

The image processing apparatus 200 includes an imaging unit 212 and a controller unit 213, and the imaging unit 212 has an illumination unit 211 and an imaging lens 221. A microcomputer is built into the controller unit 213. The casing of the image processing apparatus 200 is provided with an attachment unit 214 for attaching the image processing apparatus 200 to a support member (not shown).

The display setting unit 201 has an LCD (Liquid Crystal Display) touch panel that is integrally configured by an LCD and a touch panel for receiving an input of an operation instruction due to the LCD screen being touched by a finger or a special-purpose pen. The display setting unit 201 receives image data captured by the imaging unit 212, displays the image data on the LCD touch panel, receives an input of an instruction given by a user operation from the LCD touch panel, and transmits the instruction to the controller unit 213 of the image processing apparatus 200.

The cable unit 202 is connected to an Ethernet (registered trademark) via an I/O (Input/Output) cable. The I/O cable is connected to a PLC.

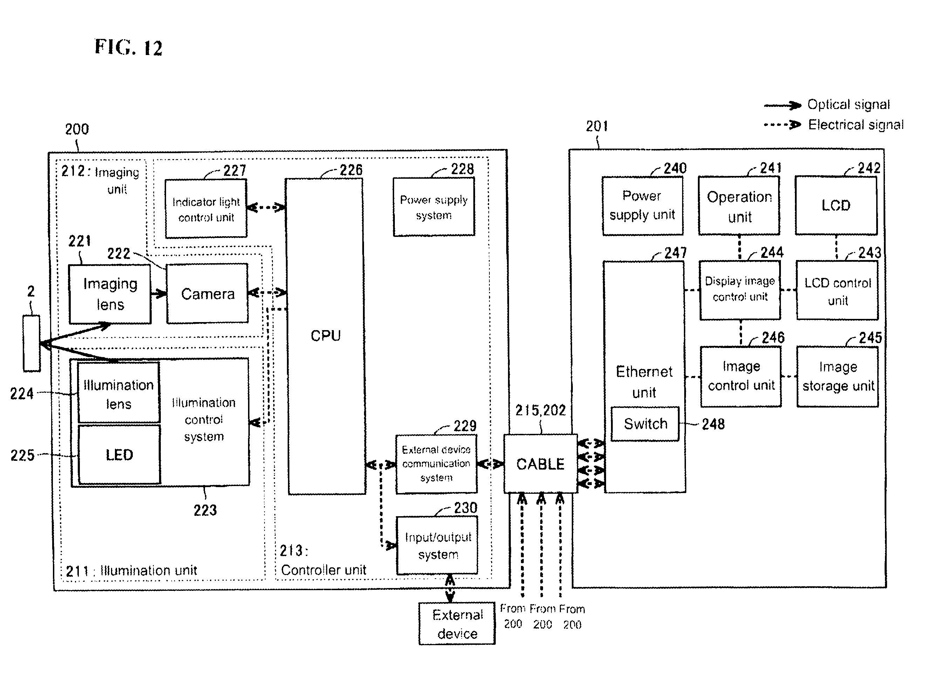

Next is a description of the block configuration of the image processing apparatus 200 and the display setting unit 201 with reference to FIG. 12. The image processing apparatus 200 includes the illumination unit 211, the imaging unit 212 for capturing an image of the workpiece 2, and the controller unit 213. The imaging unit 212 has the imaging lens 221 and a camera 222. The camera 222 has functionality corresponding to the imaging apparatus 8.

The illumination unit 211 includes an illumination control system 223 that has an illumination lens 224 and an LED (Light Emitting Diode) 225 serving as the light source.

The controller unit 213 includes an indicator light control unit 227 that controls an indicator light (not shown) such as a lamp, a CPU 226 for controlling the image processing apparatus 200, a power supply system 228 for supplying power to various units, an external device communication system 229 that can be connected to the cable unit 202, and an input/output system 230 for inputting and outputting data from and to an external apparatus.

The display setting unit 201 includes a power supply unit 240 for supplying power to various units, an operation unit 241 compatible with the touch panel, an LCD 242, an LCD control unit 243 that controls the LCD 242, a display image control unit 244 that controls the display of images on the LCD 242 via the LCD control unit 243, an image storage unit 245 for storing images, an image control unit 246, and an Ethernet (registered trademark) unit 247. The display setting unit 201 has a microcomputer, and the microcomputer realizes the functionality of the LCD control unit 243, the display image control unit 244, and the image control unit 246.

The Ethernet (registered trademark) unit 247 is connected to the cable unit 202 and includes a switch 248 for performing input switching. In the present embodiment, a plurality of image processing apparatuses 200 can be connected to the display setting unit 201 via the cable unit 202. The Ethernet (registered trademark) unit 247 has a plurality of input ports for communicating with a plurality of image processing apparatuses 200. The switch 248 selects one of the input ports in accordance with a command from the microcomputer, thus enabling the display setting unit 201 to communicate with the image processing apparatus 200 that is connected to the selected input port.

In the present embodiment, the image processing apparatus 200 has at least functions for performing an imaging operation and image processing for the registration mode and the adjustment mode described above, and the display setting unit 201 has a function for receiving an input of a user instruction regarding such processing and transmitting the received instruction to the image processing apparatus 200. Also, information indicating processing results (e.g., an image or the message 209) is transmitted from the image processing apparatus 200 to the display setting unit 201 and displayed on the LCD.

Although data for a benchmark information registration image and a throughput image is stored in the image storage unit 245 of the image processing apparatus 200 in FIG. 12, the image processing apparatus 200 may include a storage unit, and such data may be stored in that storage unit. A configuration is also possible in which such data is stored in both storage units.

In the present embodiment, a plurality of image processing apparatuses 200 may be connected by a communication path (wired or wireless) 215, and benchmark information, matching result information indicated by the message 209, and the like may be exchanged therebetween.

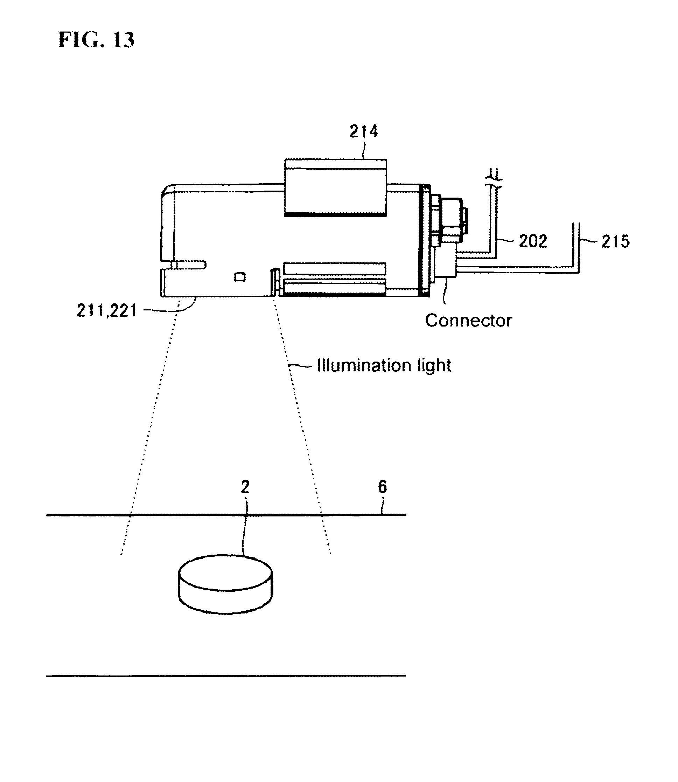

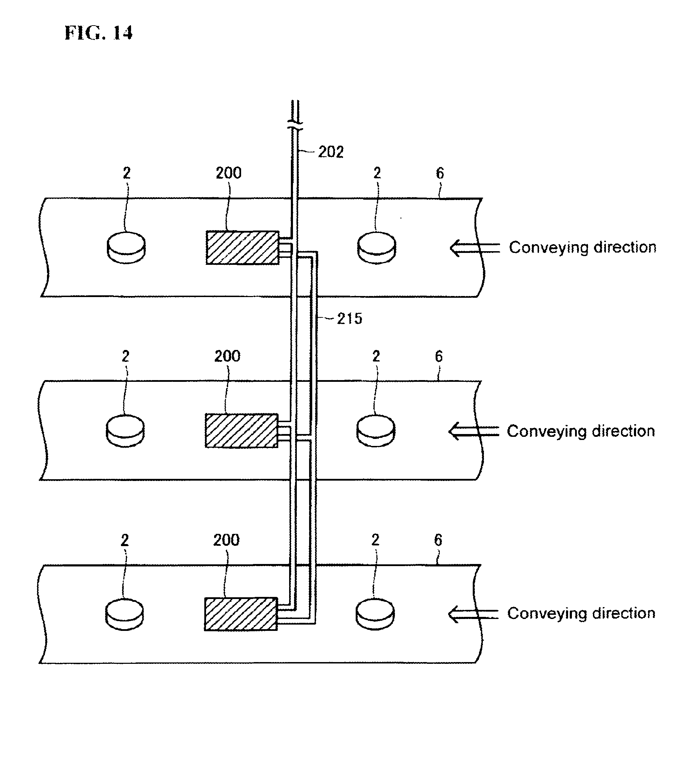

FIG. 13 shows an example of how the image processing apparatus 200 is attached. FIG. 14 shows a state in which image processing apparatuses 200 are respectively attached to conveying lines of a plurality of conveying mechanisms 6 (e.g., belt conveyors), as viewed from above the conveying lines. In FIG. 13, the image processing apparatus 200 corresponding to each line is attached to a support member (not shown) via the attachment unit 214 such that the imaging range of the camera 222 is aligned with the conveying line. When imaging is performed, illumination light is irradiated toward the conveying line of the conveying mechanism 6, thus securing illumination in the imaging range. The image processing apparatuses 200 provided for the conveying lines exchange benchmark information, matching result information indicated by the message 209, and the like with each other via the communication path 215.

According to the second embodiment, the user can check messages 209 based on captured images from a plurality of image processing apparatuses 200 using one display setting unit 201, thus enabling the user to adjust the installation location of each of the image processing apparatuses 200 while referencing the output information of the one display setting unit 201.

The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

## Claims

1. An image processing apparatus (100) adapted to receive captured images from an imaging apparatus (8) installed in a manufacturing line, the image processing apparatus (100) comprising:
a receiving unit (116) adapted to receive, from the imaging apparatus (8), a first captured image of an object on the manufacturing line, in which the imaging apparatus (8) is installed at a predetermined location, and a second captured image of the object on the manufacturing line, in which the installation location of the imaging apparatus (8) may be in need of adjustment; and
a processing unit (110) adapted to process the first captured image received by the receiving unit (116) to obtain a processed image;
**characterized in that** the image processing apparatus (100) further comprises:
an output unit (120) adapted to output the processed image and the second captured image in a superimposed state, to assist the adjustment of the installation location of the imaging apparatus (8), wherein the output unit (120) outputs an image portion in which the superimposed images match and an image portion in which there is a mismatch between the superimposed images in different manners.

2. The image processing apparatus (100) according to claim 1, wherein the output unit (120) outputs an amount of image misalignment between the superimposed images.

3. The image processing apparatus (100) according to claim 1 or 2, wherein the processing unit (110) includes a contour image processing unit for converting a captured image of the object into a contour image of the object.

4. The image processing apparatus (100) according to any of claims 1 to 3, wherein the processing unit (110) includes a transparent image processing unit for converting a captured image of the object into a transparent image of the object.

5. The image processing apparatus (100) according to any of claims 1 to 4, wherein the processing unit (110) includes a freehand line image processing unit for incorporating a line image received as freehand input from an external device into the captured image.

6. An image processing program to be executed by a computer adapted to receive captured images from an imaging apparatus (8) installed in a manufacturing line,
wherein the image processing program causes the computer to function as an image processing apparatus (100) according to any of claims 1 to 5.

7. A visual sensor system comprising:
an image processing apparatus (100) according to any of claims 1 to 5; and
an imaging apparatus (8) adapted to output captured images of an object.

8. An image processing method for processing images from an imaging apparatus (8) installed in a manufacturing line, the method comprising:
receiving a first captured image of an object on the manufacturing line, from the imaging apparatus (8) installed at a predetermined location;
receiving a second captured image of the object on the manufacturing line, from the imaging apparatus (8) whose installation location may be in need of adjustment, the second captured image being captured after the first captured image; and
processing the first captured image to obtain a processed image;
the method being **characterized by**:
outputting the processed image and the second captured image in a superimposed state to assist adjustment of the installation location of the imaging apparatus (8), wherein an image portion in which the superimposed images match and an image portion in which there is a mismatch between the superimposed images are output in different manners.

9. The method according to claim 8, further comprising outputting an amount of image misalignment between the superimposed images.

10. The method according to claim 8 or 9, wherein the processing step comprises converting the first captured image of the object into a contour image of the object.

11. The method according to any of claims 8 to 10, wherein the processing step comprises converting the first captured image of the object into a transparent image of the object.

12. The method according to any of claims 8 to 11, wherein the processing step comprises incorporating a line image received as freehand input from an external device into the first captured image.

## Patentansprüche

1. Bildverarbeitungsvorrichtung (100), die eingerichtet ist, erfasste Bilder von einer Abbildungsvorrichtung (8) zu empfangen, die in einer Fertigungslinie installiert ist, wobei die Bildverarbeitungsvorrichtung (100) folgendes aufweist:
eine Empfangseinheit (116), die eingerichtet ist, von der Abbildungsvorrichtung (8) ein erstes erfasstes Bild eines Objekts auf der Fertigungslinie zu empfangen, an welcher die Abbildungsvorrichtung (8) an einem vorbestimmten Ort installiert ist, sowie ein zweites erfasstes Bild eines Objekts auf der Fertigungslinie zu empfangen, wobei der Installationsort der Abbildungsvorrichtung (8) möglicherweise anzupassen ist; und
eine Verarbeitungseinheit (110), die eingerichtet ist, das erste von der Empfangseinheit (116) erfasste Bild zu verarbeiten, um ein verarbeitetes Bild zu erhalten;
**dadurch gekennzeichnet, dass** die Bildverarbeitungsvorrichtung (100) ferner folgendes aufweist:
eine Ausgabeeinheit (120), die eingerichtet ist, das verarbeitete Bild und das zweite erfasste Bild in einem einander überlappenden Zustand auszugeben, um die Anpassung des Installationsorts der Abbildungsvorrichtung (8) zu unterstützen, wobei die Ausgabeeinheit (120) einen Bildteil, in dem die sich überlappenden Bilder übereinstimmen und einen Bildteil, in dem die sich überlappenden Bilder nicht übereinstimmen, auf unterschiedliche Weisen darstellt.

2. Bildverarbeitungsvorrichtung (100) gemäß Anspruch 1, wobei die Ausgabeeinheit (120) ein Ausmaß des Bildversatzes zwischen den sich überlappenden Bildern ausgibt.

3. Bildverarbeitungsvorrichtung (100) gemäß Anspruch 1 oder 2, wobei die Verarbeitungseinheit (110) eine Konturbildverarbeitungseinheit zum Umwandeln eines erfassten Bilds des Objekts in ein Konturbild des Objekts umfasst.

4. Bildverarbeitungsvorrichtung (100) gemäß einem der Ansprüche 1 bis 3, wobei die Verarbeitungseinheit (110) eine Tranzparenzbildverarbeitungeinheit zum Umwandeln eines erfassten Bilds des Objekts in ein transparentes Bild des Objekts umfasst.

5. Bildverarbeitungsvorrichtung (100) gemäß einem der Ansprüche 1 bis 4, wobei die Verarbeitungseinheit (110) eine Freihandstrichbildverarbeitungeinheit zum Einbinden eines von einem externen Gerät als Freihandeingabe empfangenen Strichbilds in das erfasste Bild umfasst.

6. Bildverarbeitungsprogramm zum Ausführen auf einem Computer, der eingerichtet ist, erfasste Bilder von einer Abbildungsvorrichtung (8) zu empfangen, die in einer Fertigungslinie installiert ist,
wobei das Bildverarbeitungsprogramm den Computer als Bildverarbeitungsvorrichtung (100) gemäß einem der Ansprüche 1 bis 5 operieren lässt.

7. Visuelles Sensorsystem, aufweisend:
eine Bildverarbeitungsvorrichtung (100) gemäß einem der Ansprüche 1 bis 5, und
eine Abbildungsvorrichtung (8), die eingerichtet ist, die erfassten Bilder eines Objekts auszugeben.

8. Bildverarbeitungsverfahren zum Verarbeiten von Bildern einer Abbildungsvorrichtung (8), die in einer Fertigungslinie installiert ist, wobei das Verfahren Folgendes aufweist:
Empfangen eines ersten erfassten Bilds eines Objekts auf der Fertigungslinie von der an einem vorbestimmten Installationsort installierten Abbildungsvorrichtung (8);
Empfangen eines zweiten erfassten Bilds des Objekts auf der Fertigungslinie von der Abbildungsvorrichtung (8), deren Installationsort möglicherweise anzupassen ist, wobei das zweite erfasste Bild nach dem ersten erfassten Bild erfasst wird; und
Verarbeiten des ersten erfassten Bilds um ein verarbeitetes Bild zu erhalten;
**dadurch gekennzeichnet, dass**:
das verarbeitete Bild und das zweite erfasste Bild in einem einander überlappenden Zustand ausgegeben werden, um die Anpassung des Installationsorts der Abbildungsvorrichtung (8) zu unterstützen, wobei ein Bildteil, in dem die sich überlappenden Bilder übereinstimmen und ein Bildteil, in dem die sich überlappenden Bilder nicht übereinstimmen, auf unterschiedliche Weisen dargestellt werden.

9. Verfahren gemäß Anspruch 8, ferner aufweisend ein Ausgeben eines Ausmaßes des Bildversatzes zwischen den sich überlappenden Bildern.

10. Verfahren gemäß Anspruch 8 oder 9, wobei der Verarbeitungsschritt ein Umwandeln des ersten erfassten Bilds des Objekts in ein Konturbild des Objekts umfasst.

11. Verfahren gemäß einem der Ansprüche 8 bis 10, ferner aufweisend ein Umwandeln des ersten erfassten Bilds des Objekts in ein transparentes Bild des Objekts.

12. Verfahren gemäß einem der Ansprüche 8 bis 11, wobei der Verarbeitungsschritt ein Einbinden eines von einem externen Gerät als Freihandeingabe empfangenen Strichbilds in das erste erfasste Bild umfasst.

## Revendications

1. Appareil de traitement d'image (100) adapté pour recevoir des images capturées à partir d'un appareil de prise de vue (8) installé dans une chaîne de fabrication, l'appareil de traitement d'image (100) comprenant :
- une unité de réception (116) adaptée pour recevoir, à partir de l'appareil de prise de vue (8), une première image capturée d'un objet sur la chaîne de fabrication, dans lequel l'appareil de prise de vue (8) est installé à un emplacement prédéterminé, et une seconde image capturée de l'objet sur la chaîne de fabrication, dans lequel l'emplacement d'installation de l'appareil de prise de vue (8) peut nécessiter un ajustement ; et
- une unité de traitement (110) adaptée pour traiter la première image capturée reçue par l'unité de réception (116) pour obtenir une image traitée ;
- **caractérisé en ce que** l'appareil de traitement d'image (100) comprend en outre :
- une unité de sortie (120) adaptée pour fournir en sortie l'image traitée et la seconde image capturée dans un état superposé, afin de faciliter l'ajustement de l'emplacement d'installation de l'appareil de prise de vue (8), dans lequel l'unité de sortie (120) fournit en sortie une partie d'image dans laquelle les images superposées correspondent et une partie d'image dans laquelle il existe un décalage entre les images superposées de différentes manières.

2. Appareil de traitement d'image (100) selon la revendication 1, dans lequel l'unité de sortie (120) fournit en sortie une quantité de défaut d'alignement d'images entre les images superposées.

3. Appareil de traitement d'image (100) selon la revendication 1 ou 2, dans lequel l'unité de traitement (110) comprend une unité de traitement de contour d'image pour convertir une image capturée de l'objet en une image de contour de l'objet.

4. Appareil de traitement d'image (100) selon l'une quelconque des revendications 1 à 3, dans lequel l'unité de traitement (110) comprend une unité de traitement d'image transparente pour convertir une image capturée de l'objet en une image transparente de l'objet.

5. Appareil de traitement d'image (100) selon l'une quelconque des revendications 1 à 4, dans lequel l'unité de traitement (110) comprend une unité de traitement d'image de ligne à main levée pour intégrer une image de ligne reçue en tant qu'entrée à main levée d'un dispositif externe dans l'image capturée.

6. Programme de traitement d'image destiné à être exécuté par un ordinateur adapté pour recevoir des images capturées à partir d'un appareil de prise de vue (8) installé dans une chaîne de fabrication, dans lequel le programme de traitement d'image amène l'ordinateur à fonctionner comme un appareil de traitement d'image (100) selon l'une quelconque des revendications 1 à 5.

7. Système de détection visuelle, comprenant :
- un appareil de traitement d'image (100) selon l'une quelconque des revendications 1 à 5 ; et
- un appareil de prise de vue (8) conçu pour fournir en sortie des images capturées d'un objet.

8. Procédé de traitement d'image pour traiter des images d'un appareil de prise de vue (8) installé dans une chaîne de fabrication, le procédé consistant à :
- recevoir une première image capturée d'un objet sur la chaîne de fabrication, à partir de l'appareil de prise de vue (8) installé à un emplacement prédéterminé ;
- recevoir une seconde image capturée de l'objet sur la chaîne de fabrication, à partir de l'appareil de prise de vue (8) dont l'emplacement d'installation peut nécessiter un ajustement, la seconde image capturée étant capturée après la première image capturée ; et
- traiter la première image capturée pour obtenir une image traitée ;
le procédé étant **caractérisé par** le fait de :
fournir en sortie l'image traitée et la seconde image capturée dans un état superposé afin de faciliter l'ajustement de l'emplacement d'installation de l'appareil de prise de vue (8), dans lequel une partie d'image dans laquelle les images superposées correspondent et une partie d'image dans laquelle il existe un décalage entre les images superposées sont fournies en sortie de différentes manières.

9. Procédé selon la revendication 8, consistant en outre à fournir en sortie une quantité de défaut d'alignement d'images entre les images superposées.

10. Procédé selon la revendication 8 ou 9, dans lequel l'étape de traitement comprend la conversion de la première image capturée de l'objet en une image de contour de l'objet.

11. Procédé selon l'une quelconque des revendications 8 à 10, dans lequel l'étape de traitement comprend la conversion de la première image capturée de l'objet en une image transparente de l'objet.

12. Procédé selon l'une quelconque des revendications 8 à 11, dans lequel l'étape de traitement comprend l'intégration d'une image de ligne reçue en tant qu'entrée à main levée d'un dispositif externe dans la première image capturée.
